# EUROPEAN PATENT APPLICATION

(11) **EP 2 682 756 A2**
(43) Date of publication of application: **08.01.2014**
(21) Application number: 13165300.8
(22) Date of filing: 25.04.2013
(51) Int. Cl.: G01N 35/00, G01N 21/03, G06K 7/10, G06T 7/00

(54) **Device for reading barcodes**

(30) Priority: 25.04.2012 GB 201207238
(71) Applicant: Ziath Ltd, Cambridge, Cambridgeshire CB22 5EG (GB)
(72) Inventor: Dilks, Timothy John, Trumpington, Cambridge CB29HS (GB); Dilks, Ekaterina, Trumpington, Cambridge CB2 9HS (GB)
(74) Representative: Gwilt, Julia Louise

(57) **Abstract**

An image capture device for capturing an image of a test tube rack comprising a plurality of test tubes each having an individual barcode thereon, the image capture device comprising: an enclosure comprising a transparent window which, in use, is adjacent the test tube rack to be imaged; at least one camera mounted within the enclosure to capture an image through the window; a plurality of light sources mounted within the enclosure to illuminate the window and at least one light blocking element arranged to at least partially block light radiating from at least one of the plurality of light sources, wherein the plurality of light sources and the at least one light blocking element are arranged within the enclosure to provide generally uniform illumination across the whole window and to reduce unwanted reflections.

## Description

### FIELD OF THE INVENTION

This invention relates to an image capture device for example for imaging barcodes located on containers/tubes held in racks and to related methods.

### BACKGROUND TO THE INVENTION

Automated and robotic systems are widely used in research and analysis laboratories in the pharmaceutical, biotechnology and veterinary industries, where large numbers of biological samples such as blood and other human/animal fluids, biological drug candidates or small molecule libraries in powder or liquid form are handled. Increasingly, samples are contained within test tubes or vials that are labelled with unique 2D barcodes generally placed on the base of the tube in order to identify each individual sample. The barcode acts as an identifier to allow a researcher to access information about the sample from a file or database with ease.

Such tubes are commonly held in racks that allow samples to be easily transported and enable the barcodes on the base of the tubes to be read. In automated systems, machine vision is used to capture images of the base of a rack and analyse the images to determine the barcode on each tube. In any machine vision application, the quality of the image that is captured is vital to the success of the resulting analysis.

In order to capture an image, an image capture device is required. All image capture devices contain an image sensor or sensors. Three types of image sensor are generally used: charged couple devices (CCD); complementary metal-oxide-semiconductor (CMOS); and Contact Image Sensors (CIS). The first two types of image sensor are utilised both in line-scanners and in camera based systems. The third type is only used in line-scanners.

Line-scanners (commonly known as flatbed scanners) are the most common image capture devices used in this field. Line-scanner technology works by mechanically moving a 1D image sensor (generally a CIS or a CCD) together with an integrated light source across the object that is to be imaged. The light source is moving with the sensor so that each point of the object is evenly illuminated whereby an evenly illuminated image is captured. However, one disadvantage of a line scanner is the time delay while the sensor is capturing the image.

An alternative to the line-scanner is a camera based device using one or more CCD or CMOS image sensors which are fixed within the device. The image sensors are 2D sensors that capture a 2D image of the object. One advantage of camera based devices over the line scanner is that they having no moving parts and so they can capture images rapidly. However, it is more difficult to ensure that there is an adequate light source within the device to ensure even illumination and minimal unwanted reflections across the object. Furthermore, the camera based devices are expensive when compared to the line-scanners.

Both line-scanners and camera devices are generally too large to incorporate into an automated/robotic system. For example, considering some devices which are currently available in the market place; the smallest scanner that is currently in use is based on the FI-60f available from Fujitsu. This is a flatbed scanner that utilises a CIS sensor to minimise the size of the scanner and provide a fast image capture time. However, even this small scanner is not small enough for all integration situations. Moreover, the CIS sensor that it contains has a very low usable depth of field and is extremely sensitive to ambient light conditions. These restrictions often lead to unreliable operation in the real world.

Another imaging system currently in use is the 'AVA6 plus', available from Avision in Taiwan. This system has the advantage that it uses a CCD to capture image leading to a much greater usable depth of field and much less susceptibility to ambient light conditions. This means that its performance in real world conditions is significantly better than the Fi-60f. However, there is a trade-off to achieve better real world performance because the scanner is larger and slower than the Fi-60f. Accordingly, the device is even less suitable for integration. Turning to the camera devices, there are several propriety systems on the market that use various types of camera. However, all these systems have a larger footprint and a much larger height that the line-scanners. Thus, they are also often too large for integration into robotic systems. In addition the camera devices are generally an order of magnitude more expensive to produce because of the expensive cameras that are used.

Background prior art can be found in EP2148291.

The present applicant has recognised the need for an alternative device which addresses the requirements of cost effectiveness, speed and a small footprint.

### SUMMARY OF THE INVENTION

According to a first aspect of the invention, there is provided an image capture device for capturing an image of a test tube rack comprising a plurality of test tubes each having an individual barcode thereon, the image capture device comprising:
an enclosure comprising a transparent window which, in use, is adjacent the test tube rack to be imaged;
at least one camera mounted within the enclosure to capture an image through the window;
a plurality of light sources mounted within the enclosure to illuminate the window and
at least one light blocking element arranged to at least partially block light radiating from at least one of the plurality of light sources,
wherein said plurality of light sources and said at least one light blocking element are arranged within the enclosure to provide generally uniform illumination across the whole window and reduce unwanted reflections at the at least one camera.

It will be appreciated that by providing generally uniform illumination across the window, i.e. across the whole surface of the window, the rack of tubes or other object to be imaged placed in contact or close proximity with the window will also be uniformly illuminated. By generally uniform illumination it is meant that the illumination across the window is within a predefined range which is suitable for the camera and optics being used. Alternatively, generally uniform illumination may be defined as providing illumination that varies by no more than approximately 20% from the maximum illumination. This enables high quality images to be captured and transferred to a host in order decode barcodes present in the images. Typically, the rack of tubes will be placed on top of the window and an image of the base of rack of tubes will be captured. However, it will be appreciated that other arrangements are also possible, for example, if the barcodes are placed on the top of the tubes, the image capture device may be supported with its window above the tube rack. Furthermore, it will be appreciated that whilst the invention is described in the context of capturing an image of a test tube rack, it may also be suitable for capturing images of other objects, such as passports, driving licences or other identification documents.

The illumination provided by the plurality of light sources is predominantly direct illumination, i.e. it travels direct from the light source to the window without being reflected via another component. Some light rays may be reflected off the walls of the enclosure onto the window. However, such light rays will have travelling further to reach the window and thus they will have lower intensity.

When a tube rack is placed in contact or in close proximity with or the window, the base of the tube rack will reflect light back to the at least one camera. Similarly, if another object to be imaged is placed on the window, the object will reflect light. The nature of the reflection will depend on the material of the tube rack or object to be imaged. For example, if the base surface of the tube rack is generally matte, incoming light is reflected in a broad range of directions, i.e. there is diffuse reflection. By contrast, if the base surface of the tube rack or other object is generally glossy, there is will a mixture of diffuse reflection and specular reflection. Specular reflection is the mirror-like reflection of light in which light coming from a single incoming direction is reflected in a single outgoing direction. Reflection, in particular specular reflection where the light is directed straight back at the camera, is problematic for barcode reading as it can cause both the background material and the barcode to appear washed out, destroying the contrast that is required in order to read the barcode. For specular reflection, the angle of incidence is equal to the angle of reflection. Accordingly, the angle that light rays from the plurality of light sources strike an object being imaged is also an important factor in minimising reflections that may reduce the contrast between a barcode and a test tube.

Light spreads out from a fixed light source at a rate that is inversely proportional to the square of the distance from the light source. Accordingly, the intensity of the light at the object being imaged is affected by the distance between the light source and the object being imaged. Thus, the device of the present invention provides even illumination by appropriate setting of one or more parameters which include distance between the light source and the window, intensity of each of the plurality of light sources, numbers of light sources, angling of light sources and location of the at least one blocking member.

The light blocking element may be arranged to block light radiating from at least one of the plurality of light sources having an angle of incidence on the window such that direct (i.e. specular) reflection falls on the at least one camera. In such cases, the light to be blocked may fall on the window at a point which is directly above the approximate mid-way between the light source and the camera. The intensity of light diminishes with distance and thus the light blocking element may be arranged to block the shortest rays of light radiating from at least one of the plurality of light sources. Typically, the specular reflection from such rays is most likely to be cause of any wash-out.

Said plurality of light sources may comprise a first set of light sources and a second set of light sources which are located within the enclosure so that the first set of light sources illuminates a first section of the window and the second set of light sources illuminates a second section of the window. The first and second sections may at least partially overlap to provide overlap regions in which light rays from both the first and second set of light sources illuminate the window. In this way, the overlap regions will receive a mixture of intensity of light from different sources which assists in providing more even illumination and also light rays at angles that are unlikely not produce the unwanted specular reflections.

The first set of light sources may be brighter than the second set of light sources. Together with, or independently from, the use of overlap regions, using a mixture of lights of different intensities means that the window receives a mixture of intensity of light from different sources. The first set of light sources may be located further from the window than the second set of light sources. In this way, light of approximately the same intensity may be reaching the window.

Each of said first and second set of light sources may comprise at least one array of light sources. There may be multiple arrays in each set of light sources with different arrays mounted at different locations, e.g. opposed end wall, of the enclosure. The arrays may be arranged symmetrically within the enclosure. Each array may have the same or different numbers of light sources.

The first set of light sources and the second set of light sources may be mounted at different angles relative to each other. In this way, the sets of light sources may be arranged to illuminate different sections of the window and again to provide light rays falling at different angles on the window. For example, the first set of light sources may be arranged generally perpendicular to the window. In this way, light from the first set of light sources illuminates a first section of the window which covers at least the central section of the window but does not extend to the end of the window nearest to the first set of light sources. The second set of light sources may be mounted at an angle relative to the window, for example to angle light from the second set of light sources on a second section which extends from an end of the window nearest to the second set of light sources.

The plurality of light sources may comprise LEDs or other light sources. The intensity of at least one of the plurality of light sources may be adjustable. For example, where appropriate, e.g. for LEDs, the brightness of each light source may be controlled by controlling the amount of current flowing through each light source which may be controlled by appropriate selection of a resistor coupled to the light source. Coupling a high value resistor in parallel with a light source means that less current will flow and the light source will be dimmer than if a low value resistor is used. Accordingly, the brighter light source(s) may be connected in parallel to lower value resistor than the dimmer light source(s).

As an alternative to the use of fixed value resistors, the brightness of the light sources may be electronically controlled, for example using a more sophisticated current limiting device. The reflectiveness and contrast of the barcodes used in the tubes differs greatly between manufacturers. Thus, varying the brightness electronically may be particularly useful for adapting the image capture device to different tube racks made by different manufacturers. For example, one manufacturer uses a very reflective white background to print their barcode on and being able to reduce the brightness when using the image capture device for such tube racks may be helpful to improve image quality.

The colour of one or more of the plurality of light sources may also be controlled. The light sources may provide white light. Alternatively, the plurality of light sources may comprise a plurality of multi-colour LEDs.

The enclosure may be in the form of a generally rectangular enclosure comprising a pair of opposed side walls, a pair of opposed end walls, a base and a top which at least partially comprises the window. The plurality of light sources may be mounted adjacent to at least one end wall, for example, the plurality of light sources may be mounted on or near the at least one end wall. Where the light sources are spaced from the end wall, circuitry and/or cabling may be routed behind the light sources to avoid blocking the cameras.

The at least one light blocking element may project from the least one end wall adjacent which the plurality of light sources are mounted for example, the at least one element may be a generally planar plate. However, other shapes which provide the desired functionality of, partially block light radiating from at least one of the plurality of light sources, may be also be used.

The plurality of light sources may be symmetrically placed within the enclosure with light sources mounted adjacent to both end walls, for example, the first set of light sources may be mounted below the second set of light sources, particularly when the first set is brighter than the second set.

There may be at least a pair of light blocking element which are symmetrically placed within the enclosure with one light blocking element projecting from each end wall. The light blocking element may be positioned between the first and second sets of lights whereby the light blocking element blocks light from the first set but does not block light from the second set of lights, particularly when the first set of light sources is brighter than the second set of light sources.

There may be at least a first camera and a second camera which are located within the enclosure so that the first camera captures an image through a first section of the window and the second camera captures an image through a second section of the window. There may be four cameras each capturing an image through approximately a quarter of the window. By using four cameras and a fairly wide angle lens, the overall height of the enclosure is kept low whilst still allowing the object to be images at the required resolution.

The at least one camera may be a CMOS camera or other similar imaging camera. The illumination of the window is critical to ensure the best possible image is captured. Accordingly, the system described is constructed from cost-effective and small sized CMOS board cameras with light sources carefully arranged to illuminate the object evenly and to direct light rays at an angle that minimises unwanted reflections from the background of the barcodes.

The window may have dimensions which are approximately equal to dimensions of a tube rack or other object to be placed on the device. There may be a plurality of positioning elements to assist in correct positioning of a tube rack relative to the window. At least one of the plurality of positioning elements may mask at least some of the plurality of light sources and the at least one light blocking element. Accordingly, the at least one plurality of positioning element may be used to define the size of the window. In this way, the overall dimensions of the enclosure may be kept to a minimum. The width of the enclosure may be approximately equal to that of the window, and hence the tube rack. Furthermore, the length of the enclosure may be approximately equal to that of the window together with the length of the positioning element. In other words, a compact enclosure is provided. It will be appreciated that if a different shape of enclosure is used, different types of positioning element could be used with the aim of keeping the size, i.e. footprint, of the enclosure to a minimum. Thus, the image capture device can be integrated onto robotic systems.

For enclosures which have a similar dimension to the window, the majority of light rays will directly strike the object being imaged and thus specular problem is a particular problem. For larger enclosures, i.e. enclosures in which the upper surface of the enclosure has a larger surface area than the window, at least some of the light rays will strike the underside of the upper surface. Accordingly, specular reflection does not pose a problem for these areas even when the angle of incidence equals the angle of reflection because these areas fall outside the location where the object to be imaged lies. Specular reflection thus needs to be particularly addressed when the enclosure matches the size of the window (and hence the size of the object being imaged).

The image capture device may further comprise a controller which is configured to control capture of an image of a test tube rack by the image capture device. The controller may be housed in a separate housing so that the size of the enclosure of the imager is kept low. Alternatively, the controller may be integrated within the enclosure.

The controller may comprise a low powered embedded PC. The controller may be configured to provide several required functions. Firstly, the controller may be configured to provide power for the plurality of light sources. Furthermore, the controller may be configured to turn the lights sources off when not required and/or control their intensity depending on requirements, for example by limiting current flowing to the light sources as described above.

Thus according to another aspect of the invention, there is provided an image capture device for capturing an image of a test tube rack comprising a plurality of test tubes each having an individual barcode thereon, the image capture device comprising:
an enclosure comprising a transparent window which, in use, is adjacent the test tube rack to be imaged;
at least one camera mounted within the enclosure to capture an image through the window;
a plurality of light sources mounted within the enclosure to illuminate the window; and
a controller which is configured to control the intensity of the plurality of light sources to provide generally uniform illumination across the whole window.

The at least one camera may be constantly taking images of the window (and any objects in contact therewith), particular for the cost-effective CMOS cameras. The controller may thus be configured to receive a continuous stream of images from the at least one camera. In this case, the controller may be further configured to act as a buffer for the at least one camera to control when an image is output from the image capture device. Thus, the controller may be configured to control capture of an image of a test tube rack placed on the image capture device by
receiving a request from a host computer for an image;
in response to receiving the request, storing the next image from the continuous stream of images; and
transmitting the stored image to the host computer.

The image capture device may be connectable to a host computer to provide an image capture system. Accordingly, the controller may be configured to enable the host computer's I/O bandwidth to be utilised only when required. The controller may thus be configured to enable connectivity to the host computer (for example via Ethernet). The controller may be configured to transfer data to the host computer in the form of raw, unprocessed images whereby no image processing happens on the controller itself. This reduces the processing power requirements of the controller. Alternatively, a more powerful controller could be produced that could do some, or all, of required image processing.

It is possible that the light sources may be moveably mounted within the enclosure to adjust the regions illuminated. Any such movement may be controllable by the controller.

The host computer may be a desktop PC or a similar computer which allows a user to interact with the image capture device. The host computer may have an interface which allows a user to select the type of rack being imaged. The host computer may also provide image processing to transform the high quality images captured by the image capture device in order to decode barcodes present in the images.

According to another aspect of the present invention, there is also provided a method of controlling an image capture device and/or system as described above.

According to another aspect of the invention, there is provided a method of controlling an image capture device for capturing an image of a test tube rack comprising a plurality of test tubes each having an individual barcode thereon, the image capture device comprising:
an enclosure comprising a transparent window which, in use, is adjacent the test tube rack to be imaged;
at least one camera mounted within the enclosure to capture an image through the window; and
a plurality of light sources mounted within the enclosure to illuminate the window;
the method comprising
   receiving a continuous stream of images from the at least one camera;
   receiving a request from a host computer for an image;
   in response to receiving the request, storing the next image from the continuous stream of images; and
   transmitting the stored image to the host computer.

According to another aspect of the invention, there is provided an image capture device for capturing an image of an object, the image capture device comprising:
an enclosure comprising a transparent window which, in use, is adjacent the object to be imaged;
at least one camera mounted within the enclosure to capture an image through the window;
a plurality of light sources mounted within the enclosure to illuminate the window and
at least one light blocking element arranged to at least partially block light radiating from at least one of the plurality of light sources,
wherein said plurality of light sources and said at least one light blocking element are arranged within the enclosure to provide generally uniform illumination across the whole window and reduce unwanted reflections at the at least one camera.

The image capture device may comprise the features described above in relation to the first aspect of the invention.

The invention further provides processor control code to implement the image capture system described above, for example on an embedded processor. The code may be provided on a carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language. As the skilled person will appreciate such code and/or data may be distributed between a plurality of coupled components in communication with one another.

### BRIEF DESCRIPTION OF THE DRAWINGS

The invention is diagrammatically illustrated, by way of example, in the accompanying drawings, in which:
Figure 1a shows an isometric view of an image capture device according to an embodiment of the invention;
Figures 1b and 1c show isometric views of the device of Figure 1a with some of the components removed for clarity;
Figures 2a and 2b respectively show an isometric and side view of an image capture device with side walls removed for illustrative purposes;
Figure 3a to 3c show three variations of an image capture device to illustrate the problem of unwanted reflections;
Figures 3d to 3f show the level of illumination across an axis of the window in each of the arrangements of Figures 3a to 3c, with the maximum level of illumination normalised at 100%;
Figure 4 shows the location of light sources in an alternative embodiment of the invention;
Figures 5a and 5b show the base of a tube rack and the areas captured by each camera;
Figure 6 shows a block diagram of the components of the image capture device; and
Figure 7 shows a flow chart of the communication between the host, controller and imager.

### DETAILED DESCRIPTION OF PREFERRED EMBODIMENTS

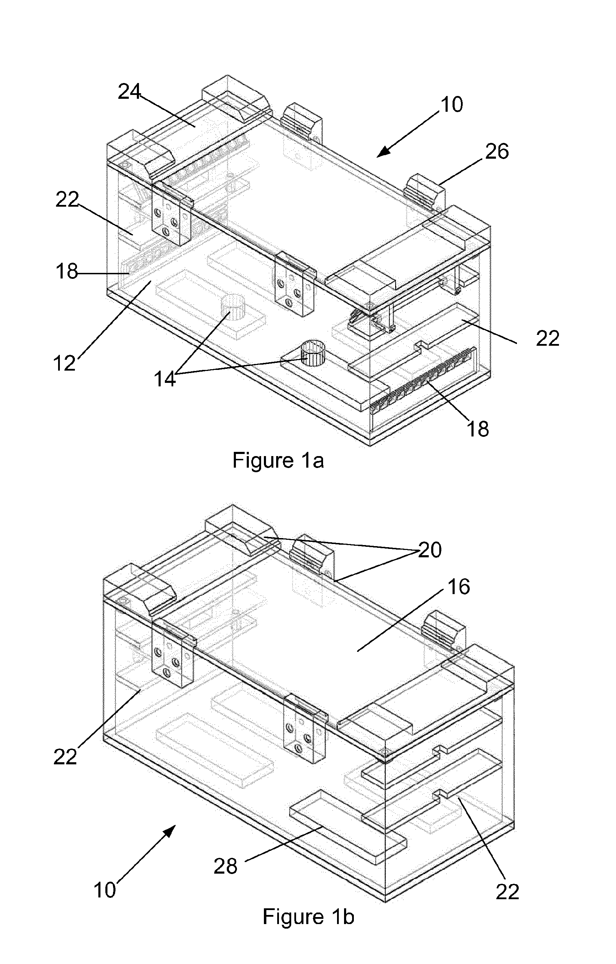

Figures 1a to 1c show an image capture device 10 according to the present invention. The image capture device 10 comprises an imager enclosure 12 having side walls, a base and a top (also termed imager). The top has a window 16 with dimensions (width and length) which generally match (i.e. is approximately equal to) those of a tube rack to be placed on the device. In this embodiment, the enclosure has the form of a generally rectangular box with the width of the box matching the width of the tube rack. It will be appreciated that other shapes of enclosure may be used provided the device is suitable for capturing an image of a tube rack placed thereon.

The enclosure 12 houses a plurality of cameras 14, a plurality of light sources 18 and a plurality of light blocking elements 22. The walls and base of the enclosure are non-transparent in order to block out light from external sources. The top of the enclosure or at least the window 16 is transparent so that a tube rack placed on the top of the device can be illuminated by the light sources and imaged by the cameras within the device.

The device also comprises tube rack positioning elements 20 to correctly position a tube rack on the device, more particularly to position the tube rack on the window.. The tube rack positioning elements 20 are arranged around the edges of the window to guide the correct alignment of the tube rack on the window. The tube rack positioning elements 20 each have a tapered or sloped edge which slopes down towards the window to assist in guiding the rack onto the window. In this embodiment, the rack positioning elements 20 comprise two end positioning elements 24 and four side positioning elements 26 although it will be appreciated that different arrangements may be used. The four side positioning elements 24 also attach the top of the device 16 to the walls of the enclosure.

The four side positioning elements 26 are arranged with a first pair of side elements on one long side of the enclosure and a second pair aligned with the first pair on the opposed long side. The spacing between the elements in opposed pairs is the same as the width of the window and enclosure which is equal to the width of the tube rack. The two end positioning elements 24 are attached at opposed ends of the top of the enclosure with the spacing between the end positioning elements 24 matching the length of a tube rack to be placed on the top of the enclosure. In this way, the enclosure may be slightly longer than a tube rack, e.g. to accommodate light sources but the tube rack positioning elements define the length of the window to match the length of the tube rack. Each of the positioning elements is tapered with a slope towards the window which also assists in placement of the tube rack on the window.

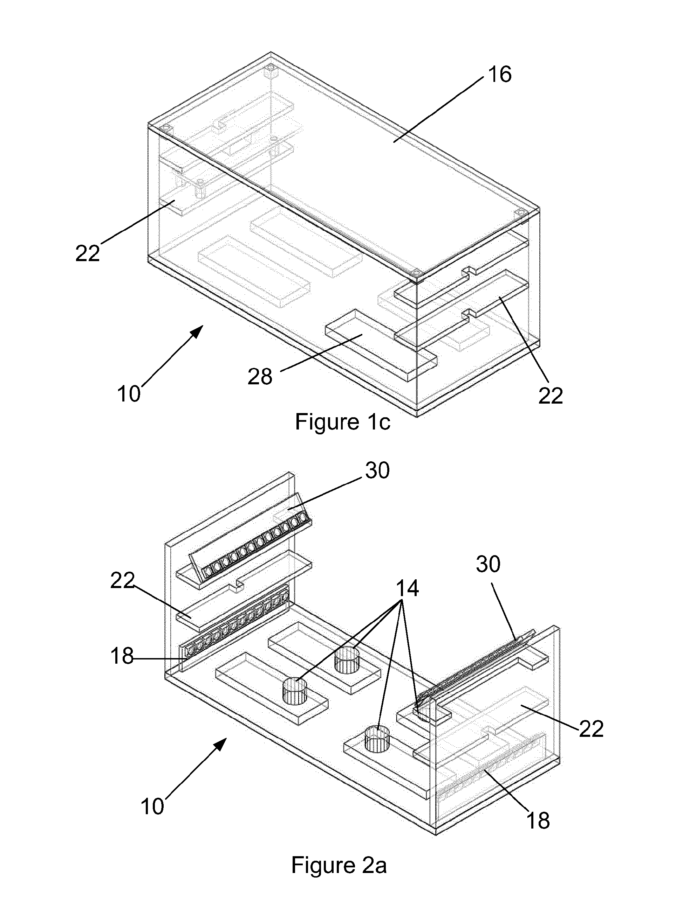

The cameras and light sources are removed from Figure 1b to allow other components to be seen more clearly. The positioning elements 20 are removed for illustrative purposes in Figure 1c to allow the inside of the image capture device to be seen clearly. As shown in Figures 1b and 1c, there are four holders 28, one for each camera. Each camera is releasably secured in a respective holder. In this way, a faulty camera may be replaced without needing to replace the whole device. The cameras may be slid into the holders.

The image capture device 10 comprises two physical boxes: an imager enclosure as described above and a controller (not shown). The imager and controller are connected via a HDMI cable that carries power from the controller to the cameras and USB signals from the cameras to the controller and a 4-pole mini-din cable, as described in more detail below. The imager enclosure contains multiple CMOS board cameras 14. As shown more clearly in Figure 2a, four CMOS board cameras 14 are used to capture images of the base of the tube rack. The cameras 14 are arranged two-by-two within the enclosure so that each camera captures an image which covers approximately one-quarter of a tube rack placed on the window. There is slight overlap at the edges of the images to allow for different arrangements of tubes to be better imaged as described in more detail below.

In use, the image capture device 10 is connected to a computer and is initialised by opening and running an associated imaging software application. The CMOS board cameras 14, may be of the type sold as model C270 available from Logitech International, headquartered in Switzerland, where each camera has a maximum resolution of 1280 (W) by 960 (H). However, many alternative cameras are available for use in the imager. The cameras are supplied with +5V from a USB power source, as described in more detail below, which initialises each camera. Once initialised, each of the four cameras will continuously stream images to the controller.

Light spreads out from a fixed light source at a rate that is inversely proportional to the square of the distance from the light source. Accordingly, the intensity of the light at the object being imaged is affected by the distance between the light source and the object being imaged. The three key factors in maximising the quality of an image captured by the cameras are:
a) An even illumination of the object;
b) The minimising of unwanted reflections from the object being illuminated; and
c) The quality and dynamic range of the image sensor within the camera used.

In order to capture the best possible image for the particular application, imaging systems are generally pre-tuned or have user-configurable options that affect the amount of light captured by the sensor. These options include the optical size of the aperture and the exposure time. If the illumination is not evenly spread across the object there may be no single combination of exposure and aperture size that will result in a single image of high-enough quality of image being captured. With high-dynamic range cameras this is less of a problem, but for cost-effective CMOS cameras the dynamic range may not be great enough. Accordingly, for the CMOS cameras uneven illumination can result in total loss of contrast in over-exposed sections of the capture image and conversely total loss of contrast in under-exposed sections of the capture image. In addition, when lighting an object from the side, light rays reach the object from many different angles, which may potentially cause unwanted reflections.

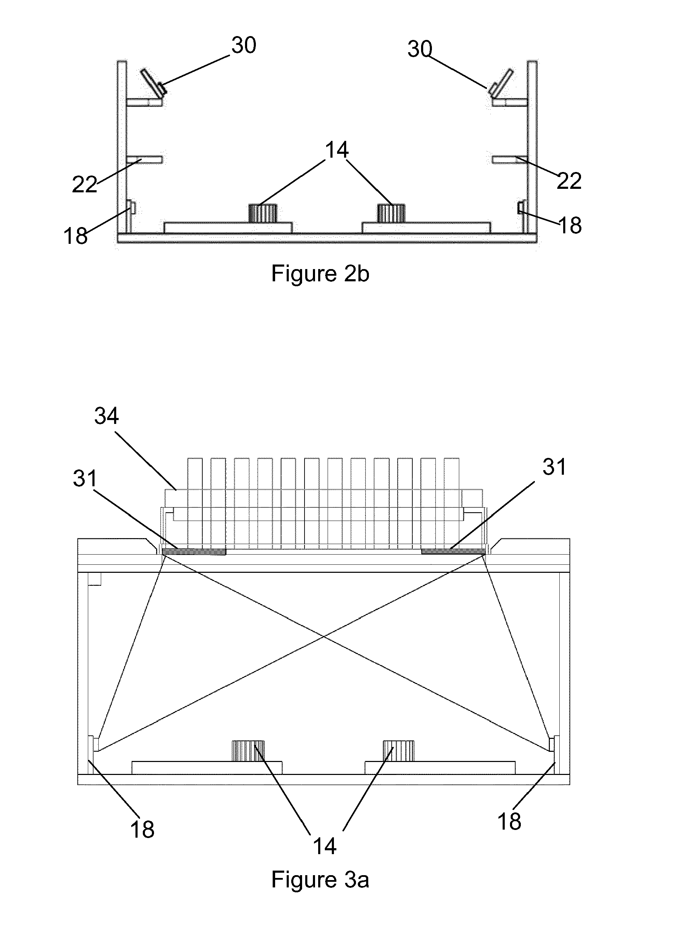

The device of the present invention provides even illumination of and controls the reflections from the object being imaged by using a combination of multiple light sources and multiple light blocking elements which are optimally positioned within the enclosure. As shown in Figures 2a and 2b, the image capture device contains multiple light sources positioned along two facing walls of the device. A first set of light sources 18 comprises an array of LEDs mounted towards the lower edge of a short side wall and a second array mounted in a similar position on the opposed short side wall. These arrays are generally perpendicular to the plane of the window. A second set of light sources 30 comprises a first array of LEDs mounted towards the upper edge of a short side wall and a second array mounted in a similar position on the opposed short side wall. These arrays are at an angle of say, 45 degrees, to the plane of the window. The first set of light sources 18 are of a higher brightness than the second set of light sources 30. Each set of light sources comprises an array in the form of a single line of 12 LEDs (each of which comprises four light sources in a single element) although it will be appreciated that different numbers of light sources could be used.

White LEDs are used in the current embodiment of the invention as these are a good general light source. However, other colour light sources may also be used in the cases where the use of different colours would improve the contrast of the resulting image such as when the barcode is printed directly onto a translucent tube. In these cases, it may be necessary to use non-white light to best illuminate the barcodes.

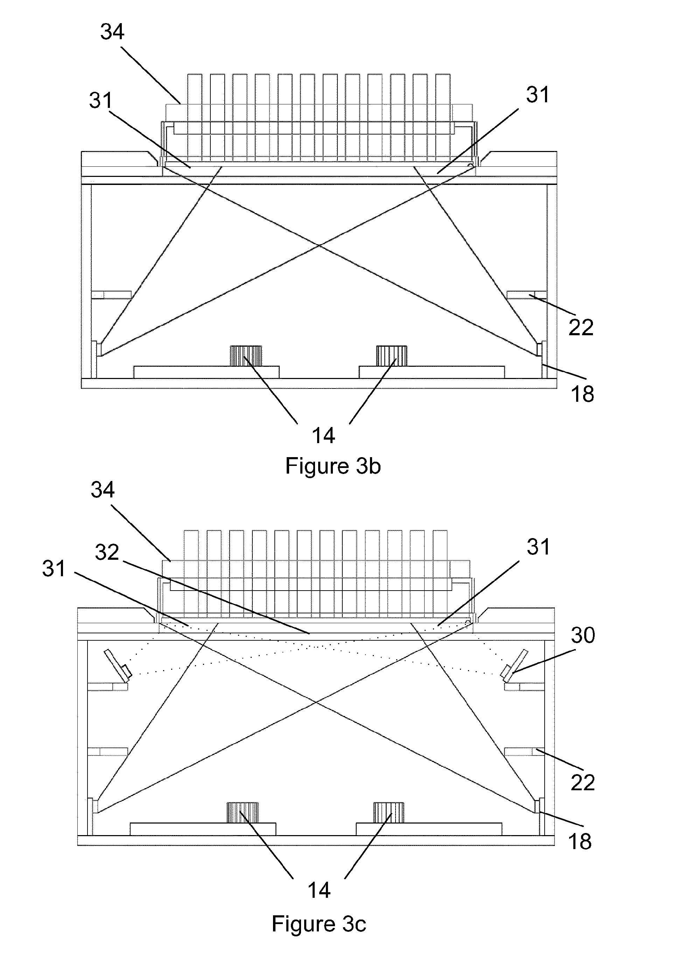

As an illustration, Figures 3a and 3b shows the paths of two rays from two bright light sources 18 and illustrate the problem of unwanted reflections causing a loss of contrast in the captured image. A first ray represents the shortest path from each light source to the window and a second ray represents the longest path from each light source to the window. (It will be understood that there are multiple rays from all light sources but they have been removed for clarity). As set out above, the intensity of light decreases with distance from the source and the intensity of light on the window from the second ray of each source is lower than that from the first ray. It will be appreciated that the majority of the illumination on the window is from the light rays which are directly illuminating the window. Some light rays may be reflected off the walls of the enclosure onto the window. However, such light rays will have travelling further to reach the window and thus they will have lower intensity.

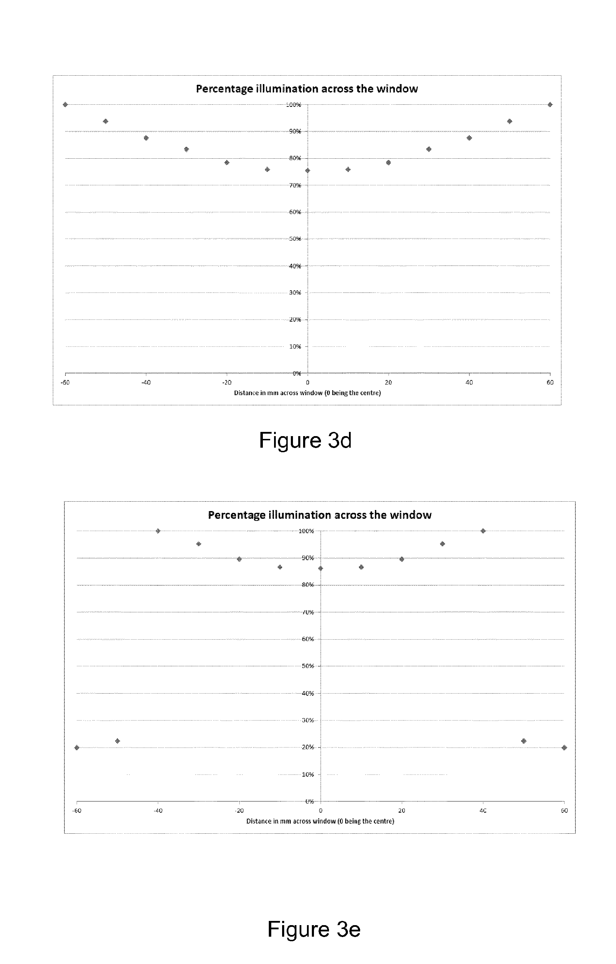

Figure 3a shows an image capture device with two light sources 18 positioned near the bottom of the enclosure and no light blocking elements. This arrangement gives rise to a variation in illumination across the window of the enclosure shown in Figure 3d. The illumination peaks at 100% both ends and gradually dips to have the dullest illumination of approximately 75% at the centre of the window (furthest away from the light sources). Reflection regions 31 are highlighted on the window. These regions 31 extend from each end of the window to approximately one quarter of the length of the window, i.e. from above the light source to above the camera lens. In these regions, the shortest rays from the light source have an angle of incidence on the window which is such that when the light ray is reflected in a single direction (specular reflection), the light is reflected directly back to at least one of the cameras. As described above, reflection is a mixture of specular reflection and diffuse reflection and thus the severity of the reflections is dependent on the material of the tubes being imaged. For example, glossy materials cause more unwanted reflections than matt materials. The reflections are particularly problematic for barcode reading systems as the reflections can reduce the contrast between the background material and barcode on the tube, making it difficult to identify and correctly read the barcode.

Figure 3b shows one possible solution to reduce the reflections which is to use light blocking elements 22 to block light from falling in this region. However, as illustrated in Figure 3e, the disadvantage of this solution is that as well as blocking the unwanted reflections, the light blocking elements 22 also block light from a source reaching the area closest to the source. The regions 31 closest to a source are now only illuminated by dim light from the light source at the other end of the enclosure and thus the illumination level has dropped to approximately 20%. This results in uneven illumination of the window.

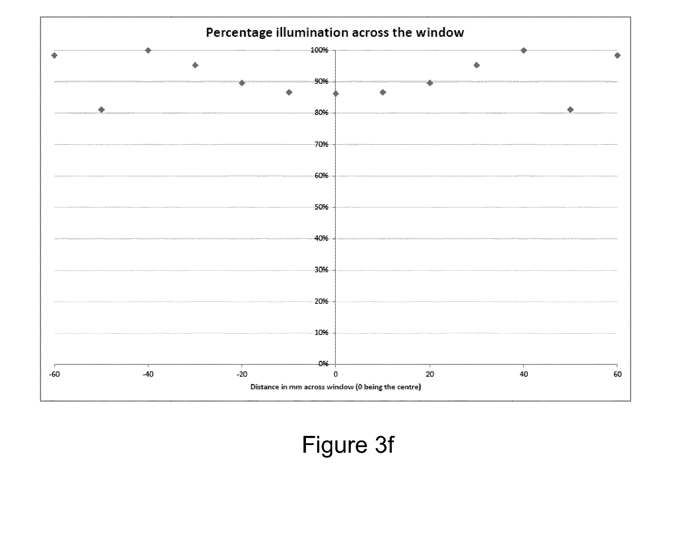

The present invention is a solution to the problems of both uneven illumination and unwanted reflections. When compared to Figure 3b, two additional light sources 30 are used. As explained above, the multiple light sources are positioned to illuminate different sections of the window. The bright light sources 18 are positioned further from the window than the dimmer light sources 30. As shown in Figure 3f the arrangement of light sources and light blocking elements is such that the window and hence a tube rack positioned on the window is subjected to a generally even illumination, i.e. the illumination varies no more than 20% of the maximum value. Furthermore, the unwanted reflections are reduced.

The dimmer light sources 30 are closer to the window of the enclosure (and the base of a tube rack 34) and provide the primary illumination for the reflection regions 31. The dimmer light sources 30 are also angled relative to the window so that the light rays are incident at different angles to those of the brighter light sources. The problem of unwanted reflections is also reduced by appropriate angling, for example, the shortest, i.e. brightest, rays from the dimmer light sources have an angle of incidence which is such that they are not directly reflected back at the camera lens where there is specular reflections. Moreover, the rays from the dimmer light source are not as bright as from the brightest light source and thus even if they are reflected back at the camera, the fall off in light intensity with distance means that their intensity is low enough to reduce the risk of washout.

The difference in intensity is balanced by arranging the light sources to control the regions of overlap 32, i.e. regions of the window which are illuminated by more than one light source. The first ray from the brighter light source and the second ray from the dimmer light source intersect at a point which is approximately one quarter of the length of the enclosure. Thus, light from the different sources will illuminate overlap area 32 which extends from approximately one quarter to one third of the length on the window. It will be appreciated that rays from the brighter light sources on the other (left hand side) of the enclosure will also illuminate this overlap section. The overlap regions 32 will therefore a mixture of intensity of light from different sources which overall gives rise to uniform light illumination on the window.

As described above, the unwanted reflections and the extent of the overlap regions are controlled by the use of light blocking members 22 which restrict the light from the bright light sources 18. Each blocking member 22 is in the form of a plate which extends generally perpendicular to the side wall of the enclosure. A blocking member 22 is mounted between the first set of light sources and the second set of light sources to prevent light from the first, brighter array of light sources illuminating the near end of the window. As shown in Figure 3c, the brighter light source 18 illuminates approximately three quarters of the window with the rays having greatest intensity illuminating the window at a location approximately one quarter of its length.

Furthermore, the unwanted reflections and the extent of the overlap regions are controlled by appropriate angling of the light sources. As described above, the brighter light source 18 only illuminates approximately three quarters of the window. The dimmer light sources 30 are positioned on a mounting plate which is set at an angle to the tube rack so that the light is directed towards the near end of the tube rack, which the bright sources on the same side do not illuminate. It is possible that the mounting plate is moveable to adjust the angle of the light source. Furthermore, it is possible that the movement is electronically controlled. In the arrangement shown, the dimmer light sources 30 thus illuminate approximately one third of the window with the rays having greatest intensity illuminating the window from the end closest to the light sources. By directing the light from the bright and dim sources in this way, the desired illumination in terms of intensity and angle of light rays can be achieved across the base of the tube rack, preventing over or under exposure in the images captured by the cost-effective cameras of a fairly low dynamic range and in addition preventing unwanted reflections from the background material of the barcodes.

The sources are described as brighter and dimmer but it will be appreciated that light sources having the same intensity could be used. The effect of uniform illumination could be achieved by appropriate positioning of the uniform light sources, blocking members and angling of the uniform light sources. Moreover, in the example above, the same number of light sources is used in both the first and second light sources on each side of the enclosure but this is also a parameter which could be adjusted to ensure uniform illumination. As described below, the intensity of the light sources is controlled by controlling the current flow through each of the brighter and dimmer sources via current limiting resistors.

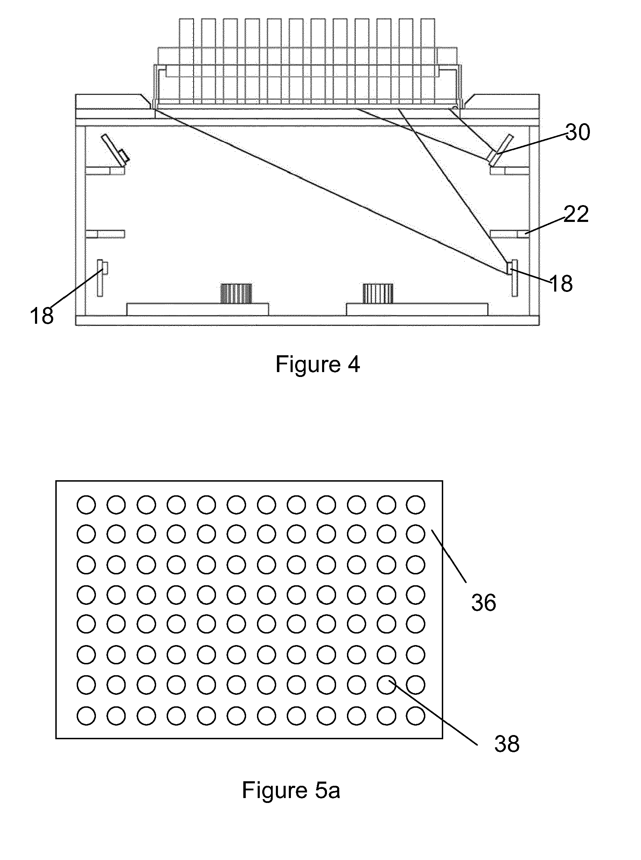

As shown in Figure 4, in an alternative embodiment of the invention, the position of the bright source 18 is different to that of the previous embodiment. In Figure 4, the bright sources 18 are spaced away from the side walls and raised above the base of the enclosure, so that cables from the light sources to the controller circuitry can be routed behind the sources so that they are prevented from unintentionally blocking the light or cameras. The light blocking member 22 prevents light from the bright source 18 from reaching the near end of the tube rack as before. Raising the bright source 18 above the base of the enclosure places the source 18 closer to the light blocking member 22, thereby blocking the light in the same way as described above without the need to change the length of the light blocking member 22. As before the light sources are predominantly directly illuminating the window.

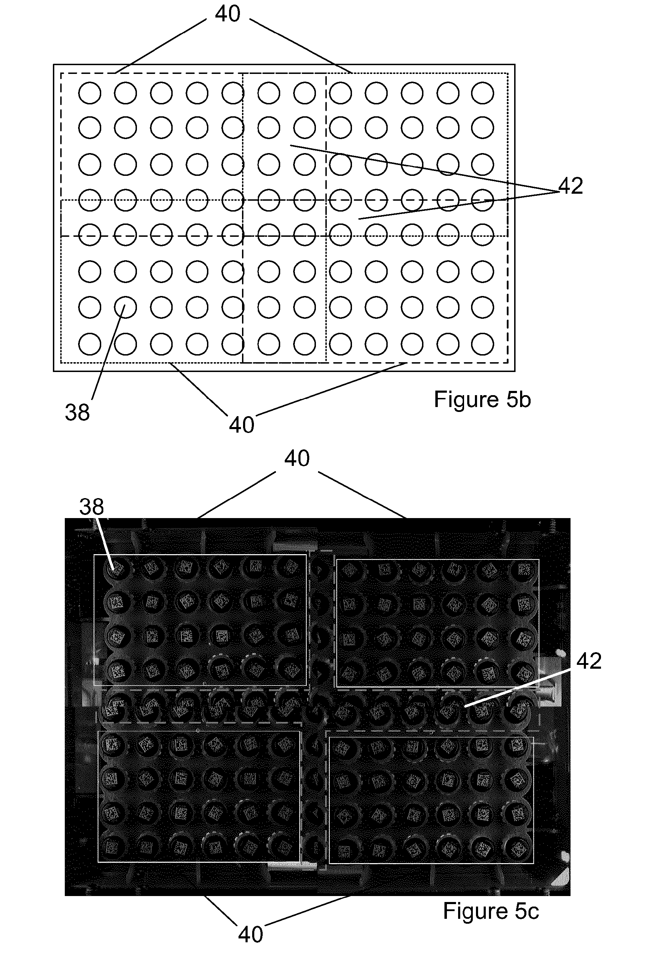

Figures 5a and 5b show the base 36 of a typical tube rack (in this case, a 96 tube rack), which is the object to be captured by the image capture device. Each circle in the diagram indicates the position of a tube in the rack and the base of each tube 38 is labelled with a barcode (2D or otherwise) which uniquely identifies the sample contained in each tube. As described above, the four CMOS cameras 14 are arranged such that each camera captures a quarter of the base 36 of the tube rack. The cameras may be arranged such that there is no overlap in the images captured. However, as shown in Figure 5b, there may be overlap between the images captured by each camera. This accounts for the possibility of a barcode being intersected by an image boundary (for example, if the tubes are arranged in a staggered pattern in the tube rack). The overlapping image region 42 may be greater than the dimension of a typical barcode so that if the barcode is not completely imaged by one camera, it is completely imaged by another. The area 40 of the image captured by each camera is shown with a dotted line (lower left and upper right cameras) or a dashed line (upper left and lower right cameras). Each area covers an array of seven by four and a half barcodes producing overlapping image regions 42 that are captured by multiple cameras. The overlap section around the short axis shows two columns of whole tubes being captured by at least two cameras, whereas the overlap section around the long axis shows that portions of tubes are captured by at least two cameras. Around the centre of the window, at least portions of the tubes are captured by all four cameras. In each case, analysis must be performed in order to ensure the entirety of the tube rack is imaged and that the barcodes are read on each tube, so that no samples are accidentally missed.

The image analysis is performed on a host computer 63. On the host computer 63, the four images captured by each of the four CMOS cameras 14 are combined to make one single image of the tube rack (using an algorithm which receives the images from the four cameras, identifies the camera associated with each image, rotates the images from particular cameras as necessary and combines the images). Figure 5c shows an example of a single combined image of a 96 (12 by 8) tube rack with overlap regions 42 indicated by dashed lines. Each camera has captured an array of six and a half by four and a half barcodes, producing the overlapping image regions 42. The image analysis uses templates that represent where barcodes in a tube rack are located for different tube rack sizes/arrangements with respect to the top-left hand corner of the single image. The templates are used to select regions of interest for each of the barcodes in the template. For example, there are 96 regions of interest for a 96 tube rack. Each region is then cut out and analysed separately.

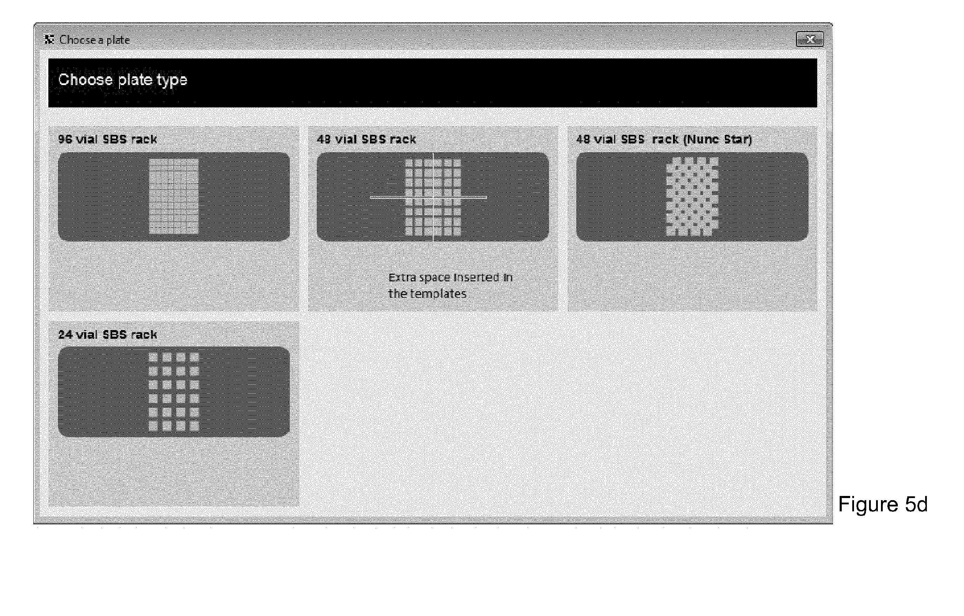

The template associated with the tube rack to be imaged is selected prior to image capture via the imaging software application associated with the image capture device. A screenshot of example templates available for selection is shown in Figure 5d; these are the most common templates and if necessary the user interface could be updated to include alternative layouts. In the case of a 48 tube rack, the template inserts a spacing halfway along each axis, where the spacing corresponds to the size and position of the overlap regions 42. The spacing is used by the image analysis software to take into account the overlap when splitting the region into sub-images representing the number of barcodes defined in the template.

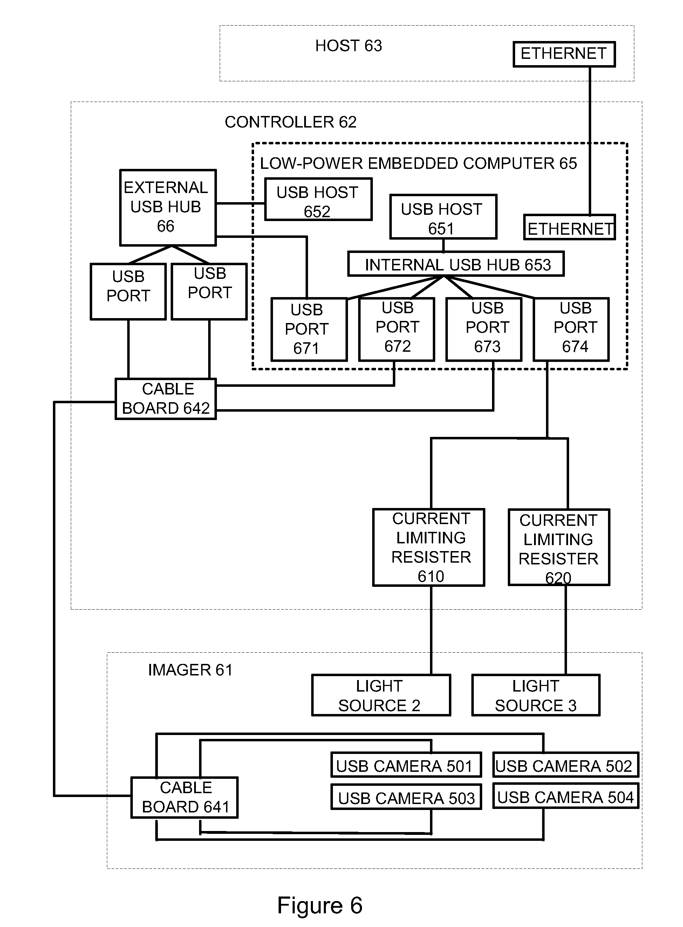

Figure 6 shows a block diagram of the layout of the system which comprises a controller 62 which interfaces with an imager 61 (which may be as described above) and a host 63. The imager 61 is connected to the controller 62 by means of two cables; one which connects to the cameras 501, 502, 503, 504 and one which connects to the light sources 2, 3. For example, these cables may be a HDMI cable and a 4-pole mini-din cable. Standard HMDI cables comprise four shielded twisted pairs and several other conducting wires. The four shielded twisted pairs carry the high-frequency USB signals for the USB cameras 501, 502, 503, 504, while the remaining wires are used to carry the +5V needed to power the cameras. This compression of the four USB cables over to the HDMI cable is achieved by a cable board 641 within the imager 61 which is connected to a corresponding cable board 642 within the controller 62. The 4-pole mini-din cable that connects the controller 62 to the imager carries the power required to the lights 2,3.

The controller 62 comprises two different value current limiting resistors 610 and 620 to control the brightness of the light sources. The light source which will output brighter light is connected to a low value resistor, such that more current flows through the light source, while the light source which will output dimmer light is connected to a high value resistor that restricts the current flow through the source. The current limiting resistors 610, 620 need not be fixed resistors. Alternative current limiting devices/techniques can be used to allow electronic control of the light source brightness, so that the intensity of light can be altered to suit the reflectivity and contrast of the barcodes used by different barcode manufacturers. For ease of design, the power for each resistor is taken directly from a single USB power port 674, thereby utilising the internal +5V power supply of an embedded system board 65. In the embedded board used, there are two USB EHCI host controllers 651, 652 and one integrated USB hub 653 which connects to four USB ports 671, 672, 673 and 674. Due to the high bandwidth requirements of streaming uncompressed high-resolution video, only two cameras may be connected to one host controller. Accordingly, a first USB EHCI host controller 651 is connected via the internal USB hub 653 and two USB ports 671, 672 to two cameras and a second USB EHCI host controller 652 is connected via an external hub 66 and two USB ports to the other two cameras. It will be appreciated that other arrangements are possible.

The low-power embedded computer 65 within the controller 62 may be a TrimSlice, available from Compulab in Israel. However, many other embedded boards are available with identical or similar features that can perform a similar function. Communication between the controller 62 and a host computer 63 is achieved using TCP/IP over an Ethernet. This method was utilised as Ethernet connectors are ubiquitous on both low-power embedded computers and the desktop computers which will generally act as a host for this invention. A further enhancement may be to design a proprietary USB connection protocol to enable the host to be connected to the controller by USB.

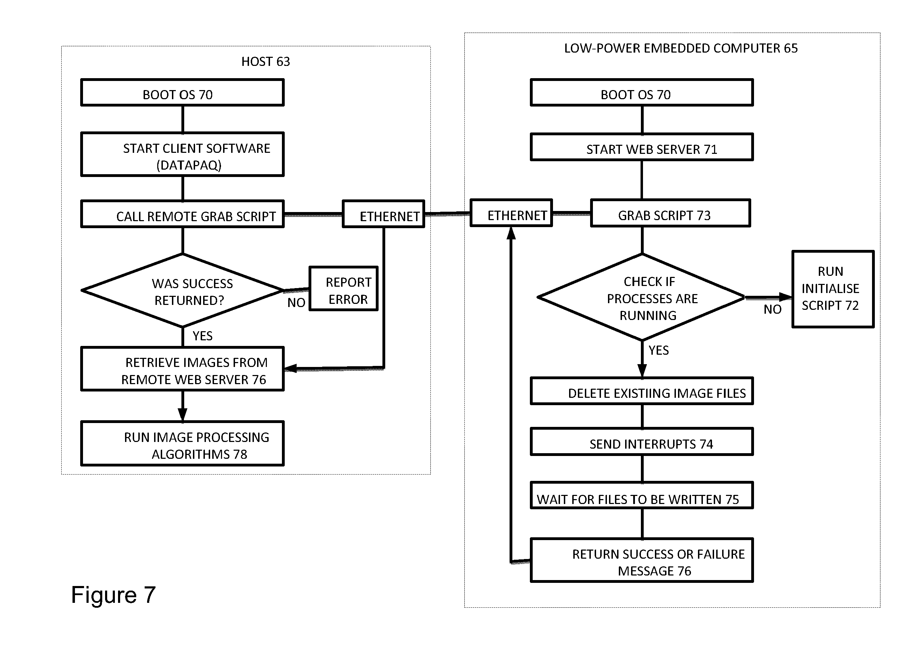

Referring now to the diagram shown in Figure 7, this diagram shows the communication process between the host 63, controller 62 and imager 61, in particular the steps undertaken within the host 63 and the low-power embedded computer 65 within the controller 61. When the controller 62 is powered up via a 12V external power supply, the operating system (OS) of the low-power embedded computer will start to boot up (step 70). On boot up a web server process (step 71) is started. This provides for simple communication via TCP/IP to be carried out between the controller and the host. The particular operating system used may be the open source Linux-based operating system, such as Ubuntu Linux, and the webserver may be the open source LightHTTPD.

The host and controller are thus now linked. At the host 63, a similar initialisation phase is begun with the operating system booting up (step 70) and the client software package being started. When the host wishes to grab an image it connects to the port and IP address of the web server 71 process that is running on the embedded computer 65 and accesses the 'grab' page. This event causes the 'grab' script to be executed on the embedded computer 65 (step 73).

The 12V external power supply provides +5V to each of the USB ports 671, 672, 673, 674. The external USB hub 66 requires a separate +5V supply which is taken from USB port 671. As soon as the +5V supply is available the light sources 2 and 3 will turn on in the connected imager 61 and power will be provided to all four of the cameras 501, 502, 503, 504. The cameras will be automatically detected by the OS and become available for initialisation. After receiving a request for a 'grab' script, the controller checks whether the processes that are used to initialise the streaming and buffering of the images from each camera are running on the embedded computer 65. If the processes are not running, the initialisation script (step 72) is then run. The initialisation script starts a single 'capture' process for each of the four cameras. These four capture processes run continuously until the controller 62 is powered off or the cameras are disconnected. Each 'capture' process initialises its respective camera in RAW mode at the required resolution and listens for an interrupt.

Once the cameras have been initialised and are streaming raw images to their respective process on the embedded computer 65, the system is ready to carry out the 'grab' script. First the controller deletes any existing image files, then the controller sends an interrupt (step 74) to each of the four running 'capture' processes. This interrupt (step 74) calls a function in the 'capture' process that will write the raw image (in YUV format) down to the file system. Accordingly, the next step is to wait for the files to be written (step 75). The controller monitors the progress of this and when all four YUV files have been written it returns a success message (step 76) to the host. If the controller determines that all four files have not been successfully written, it returns an error message to the host (step 76).

The host receives the message from the controller and determines whether or not the 'grab' script process was successful. If the process was not successful, an error report is displayed to a user. If the process was successful, the host 63 requests the four images from the web server process (step 77) that is running on the embedded computer 65. The host is now free to carry out the required image analysis (step 78) on the captured image.

In brief, the image analysis (step 78) involves a number of sub-steps between receiving the images from the four cameras and outputting a list of barcodes. Firstly, as described above, the four images from the cameras 14 are combined into one single image. This is performed using a template which represented a tube rack of a particular size/type. The template defines the regions of interest (barcodes) with respect to the top left-hand corner of the combined single image. The template defines the region of interest of each barcode in the captured image and is used to split the image into sub-images where one sub-image represents one barcode. Each of these sub-images form the input of the 2D barcode decoder algorithm (commercially available), which outputs the decoded barcode that allows a researcher to easily access information about the sample contained in a particular tube.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. An image capture device for capturing an image of a test tube rack comprising a plurality of test tubes each having an individual barcode thereon, the image capture device comprising:
an enclosure comprising a transparent window which, in use, is adjacent the test tube rack to be imaged;
at least one camera mounted within the enclosure to capture an image through the window;
a plurality of light sources mounted within the enclosure to illuminate the window and
at least one light blocking element arranged to at least partially block light radiating from at least one of the plurality of light sources,
wherein the plurality of light sources and the at least one light blocking element are arranged within the enclosure to provide generally uniform illumination across the whole window and to reduce unwanted reflections.

2. An image capture device according to claim 1, wherein the plurality of light sources comprises a first set of light sources and a second set of light sources which are located within the enclosure so that the first set of light sources illuminates a first section of the window and the second set of light sources illuminates a second section of the window.

3. An image capture device according to claim 2, wherein the first and second sections at least partially overlap to provide overlap regions.

4. An image capture device according to claim 2 or claim 3, wherein the first set of light sources is brighter than the second set of light sources and/or wherein the first set of light sources is located further from the window than the second set of light sources.

5. An image capture device according to any one of claims 2 to 6, wherein the first set of light sources and the second set of light sources are mounted at different angles relative to each other.

6. An image capture device according to any one of claims 2 to 5, wherein the at least one light blocking element is arranged to at least partially block light radiating from only one of the first and second set of light sources.

7. An image capture device according to any one of the preceding claims, wherein the plurality of light sources comprise LEDs.

8. An image capture device according to any one of the preceding claims, wherein the enclosure comprises a pair of opposed end walls and the plurality of light sources are mounted adjacent to at least one end wall with the at least one light blocking element preferably projecting from the least one end wall adjacent which the plurality of light sources are mounted.

9. An image capture device according to claim 11 or claim 12, wherein the plurality of light sources are symmetrically placed within the enclosure with light sources mounted adjacent to both end walls and at least a pair of light blocking elements may be symmetrically placed within the enclosure with one light blocking element projecting from each end wall.

10. An image capture device according to any one of the preceding claims wherein the light blocking element is arranged to block light radiating from at least one of the plurality of light sources having an angle of incidence on the window such that direct reflection falls on the at least one camera and/or the light blocking element is arranged to block the shortest rays of light radiating from at least one of the plurality of light sources.

11. An image capture device according to any one of the preceding claims, comprising at least a first camera and a second camera which are located within the enclosure so that the first camera captures an image through a first section of the window and the second camera captures an image through a second section of the window.

12. An image capture device according to any one of the preceding claims, wherein the enclosure has a face having substantially similar dimensions to the window.

13. An image capture device for capturing an image of a test tube rack comprising a plurality of test tubes each having an individual barcode thereon, the image capture device comprising:
an enclosure comprising a transparent window which, in use, is adjacent the test tube rack to be imaged;
at least one camera mounted within the enclosure to capture an image through the window;
a plurality of light sources mounted within the enclosure to illuminate the window; and
a controller which is configured to control the intensity of the plurality of light sources to provide generally uniform illumination across the whole window.

14. A method of controlling an image capture device for capturing an image of a test tube rack comprising a plurality of test tubes each having an individual barcode thereon, the image capture device comprising:
an enclosure comprising a transparent window which, in use, is adjacent the test tube rack to be imaged;
at least one camera mounted within the enclosure to capture an image through the window; and
a plurality of light sources mounted within the enclosure to illuminate the window;
the method comprising
receiving a continuous stream of images from the at least one camera;
receiving a request from a host computer for an image;
in response to receiving the request, storing the next image from the continuous stream of images; and
transmitting the stored image to the host computer.

15. Processor control code which when implemented on a controller causes the controller to carry out the method of claim 14.
